Europäisches Patentamt

(19) European Patent Office

Office européen des brevets

(11) Publication number: 0 341 187
A2

## (12) EUROPEAN PATENT APPLICATION

(21) Application number: 89630078.7

(22) Date of filing: 14.04.89

(51) Int. Cl.⁴: **B 60 C 1/00**
B 60 C 11/00

(30) Priority: 02.05.88 US 188804

(43) Date of publication of application:
08.11.89 Bulletin 89/45

(84) Designated Contracting States: DE FR GB IT

(71) Applicant: THE GOODYEAR TIRE & RUBBER COMPANY
1144 East Market Street
Akron, Ohio 44316-0001 (US)

(72) Inventor: Dill, Ronald James
1429 Bellemeade Road
Copley Ohio 44321 (US)

Monnot, Michael John
7525 Seel Avenue
N.W., N. Canton Ohio 44720 (US)

Smithkey, John Clarence, Jr.
1271 Overland Avenue
N. Canton Ohio 44720 (US)

(74) Representative: Weyland, J.J. Pierre
Goodyear Technical Center-Luxembourg
L-7750 Colmar-Berg (LU)

(54) A tire and tread.

(57) An elastomeric tread for use with tires comprising a base portion (32,68,84,92) of a first elastomeric compound, a cap portion (34,62,80,90) of a second elastomeric compound located over the base portion and a pair of side portions (36,38,64,66) of a third elastomeric compound, one of the side portions being located along each axial edge of the base portion (32,68,84,92).

FIG:2

EP 0 341 187 A2

**Description**

## A TIRE AND TREAD

### Background of the Invention

This invention relates to tires and to tire treads. This invention is particularly relevant to pneumatic tires such as radial ply tires having a tread of various compositions. More particularly this invention relates to tire treads comprising at least three different compounds.

It is also well known that certain tread compounds provide for better traction while others provide for better rolling resistance. Generally these compounds are mutually exclusive such that a compound having good rolling resistance will not provide for the desired traction and vice-versa. Coupled with this is that a tire having good rolling resistance has good tread wear while a tire having good traction characteristics has increased tread wear. Rolling resistance as used herein refers to the resistance of a tire to free rolling. As the rolling resistance of a tire increases more energy is required to cause the tire to free roll.

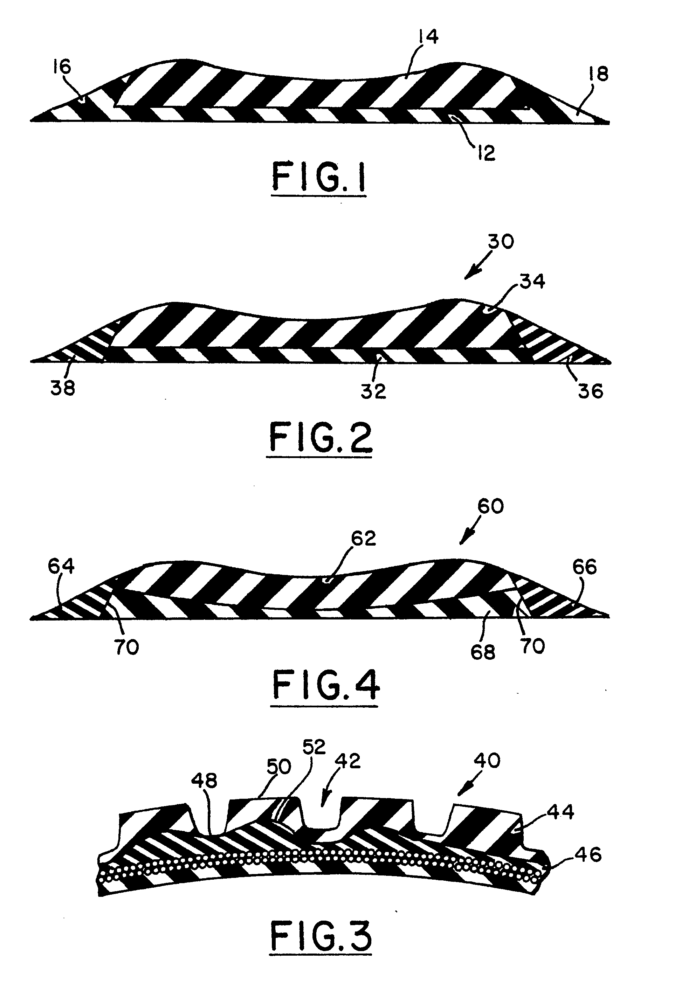

As a result the tire industry has attempted to provide various solutions to provide a tire tread which has both good rolling resistance and traction. One approach has been to provide a tread comprising two different tread compounds. For example, United States Patent No. 4,385,653 issued to Okazaki et al and entitled "Pneumatic Tire Having a Tread Constructed of at Least Two Kinds of Rubber" discloses a tread having a center zone, which engages the ground, of a low hysteresis loss compound and side zones adjacent to the center zone on both sides which are a high hysteresis loss compound. Another approach as shown in United States Patent No. 4,381,810 issued to Cady et al and entitled "Tire With Dual Tread Compound" discloses a tread having an outer ground engaging tread region composed of a lower rolling resistance compound than an inner layer which is composed of a compound which has better traction characteristics. The outer layer being thinner than the inner layer. Still another approach has been to provide a base or inner portion of a first compound with an outer layer or cap compound radially outwardly therefrom. This is substantially illustrated in Figure 1 and has been manufactured in a tire by the assignee of the present invention and will be explained further below.

The tire industry, however, is continuing investigating different and various methods to improve the rolling resistance/traction dilemma. This is especially true in passenger tires where a reduction in rolling resistance produces a corresponding reduction in energy consumption, i.e. gasoline, which produces a reduction in the operating costs of the automobile.

One method of determining the rolling resistance of a tire is by measuring the resilience of the portions of the tread. Resilience can be determined by measuring the hot rebound value of the tread. The hot rebound value, as defined by the Goodyear Healy method of ASTM Test 1054-66, is a measure of a cured rubber's hysteresis. The cured rubber's hysteresis is its tendency to generate heat or consume energy under load or working conditions. The lower the hysteresis the higher the resilience. Comparing cured rubber compounds, the compound with the higher rebound value will have a lower hysteresis, thereby generating less heat or using less energy which in turn is indicative of a lower rolling resistance.

### Summary of the Invention

This invention makes it possible to produce tire treads and tires utilizing these treads having improved rolling resistance and traction.

The treads/tires produced according to this invention have a base portion, cap portion and a pair of side portions. The treads/tires comprise three different compounds, wherein the base is a first compound having good rolling resistance, the cap portion is a different compound formulated for traction, while the side portions are a third compound formulated for flexibility to provide for the transition from the sidewalls of the tire to the base and cap portions of the tread.

The cap portion of the tread is located radially outwardly of and has a lower resilience than the base portion of the tread. One side portion is located along each axial edge of the base portion.

### Description of the Drawings

The following is a brief description of the drawings:

Figure 1 is a cross-sectional view of an unvulcanized prior art tread used in the manufacturing of a tire;

Figure 2 is a cross-sectional view of an unvulcanized tread for use in manufacturing a tire according to one aspect of the invention;

Figure 3 is a fragmentary cross-sectional view of a vulcanized tire;

Figure 4 is a cross-sectional view of an unvulcanized tread for use in the manufacture of a tire according to another aspect of the invention;

Figure 5 is a cross-sectional view of an unvulcanized tread for use in the manufacture of a tire according to another aspect of the invention;

Figure 6 is a cross-sectional view of an unvulcanized tread for use in manufacturing a tire according to another aspect of the invention; and

Figure 7 is a fragmentary cross-sectional view of a tire according to one aspect of this invention.

### Description of the Invention

In Figure 1 there is illustrated a prior art tread 10 which has been extruded but which has not yet been vulcanized. The unvulcanized tread has two tread compounds forming a tread base 12 and a tread cap 14. The base 12 extends from one lateral or axial edge 16 to the other lateral or axial edge 18. The cap 14 is located radially outwardly from the base 12 and forms the portion of the tread which will be ground engaging when attached to the tire. The unvulcanized tread 10 is of a general shape or contour. The tread is later vulcanized in a mold such that traction elements or ribs are defined by grooves in the cap to provide the ground engaging surface.

The base 12 is compounded for resistance against cracking and weathering while maintaining flexibility. Generally this results in the base 12 being a compound which is substantially similar to the compounds used in tire sidewalls.

As used herein and in the claims "axial" and "axially" refer to directions and/or displacements that are parallel to the axis of rotation of a tire or will be parallel to the rotation of a tire after the tread is installed about a tire carcass. "Radial" and "radially" refer to directions and/or displacements from the axis of rotation of the tire or will be parallel to the rotation of a tire after the tread is installed about a tire carcass.

Referring now to Figure 2, there is illustrated a tread 30, according to one aspect of the invention, which has been extruded to a general shape and contour but which has not been vulcanized. The unvulcanized tread comprises four different portions 32,34,36 and 38.

The tread cap portion 34 is located over or radially outwardly from, the tread base portion 32. The base portion 32 is also disposed axially between two tread side portions 36 and 38 respectfully. The unvulcanized tread 30 may be vulcanized in a mold to provide a more specific shape such that traction elements or ribs are defined by grooves in the cap to provide a ground engaging surface.

In this particular embodiment the tread 30 comprises three different elastomeric compounds. The base portion 32 comprises a first elastomeric compound, the cap portion 34 comprises a second elastomeric compound, while the side portions 36 and 38 comprise a third elastomeric compound.

The side portions 36 and 38 are to be compounded for resistance against cracking and weathering while maintaining flexibility. This is especially important due to the large amount of stress which is associated in this region of the tire, especially radial tires. It is believed that if this compound is not flexible enough the resulting tread/tire may develop cracking. It is also believed that this compound will generally be substantially the same as the associated sidewalls of the finished tire structure. The side portions 36 and 38 thereby provide a transition or stress gradient whereby the stress resulting from the transition from the sidewall to the tread structure is reduced.

The elastomeric compound of the base 32 does not have to be formulated to resist exposure to the elements, sun light, air, etc., as before because it is enclosed by the side portions 36,38 and the cap 34. This allows for the reduction, if not the complete removal of the anti-oxidants and anti-ozonants from the base compound. However, some small amounts may remain to prevent deterioration due to the possibility of infiltration due to cuts, cracks, etc. Furthermore, the base does not need to be formulated to have the same degree of flexibility as this function is accomplished by the side portions.

The base compound is formulated to provide for good rolling resistance while the cap is formulated for traction and treadwear. In order to accomplish this the base is formulated to have a higher resilience, lower hysteresis, than the cap compound. The base 32 may have a hot rebound value (ASTM Test 1054-66) from about 75 to about 90. The cap 34 may have a hot rebound value from about 50 to about 75. It is believed that the larger differential between the hot rebound values (and therefore a larger differential in resilience) of the cap and base compounds will produce a greater improvement in rolling resistance. It is believed that the differential should be at least about 5 in order to achieve a good improvement in rolling resistance. It is also believed that ideally the differential should be from about 10 to about 25.

The hardness of the base is believed to be less than the hardness of the cap. As a result the base is generally softer than the cap. By varying the hardness of the base the ride may be improved. Therefore, it is believed that the Shore A Hardness of the base is from about 45 to about 60 while the Shore A Hardness of the cap is from about 55 to about 75.

It is believed that improved ride will result from a higher hardness base compound. In this instance the Shore A Hardness is believed to be from 55 to about 60 for the base and from 68 to about 75 for the cap.

The particular elastomeric compounds for the various portions may be selected in accordance with this invention from compounds which are commonly known to those ordinarily skilled in the art. The important mechanical properties for a given tire may be determined from a variety of different compositions. However, in accordance with the preferred embodiment of this invention a base compound may be selected from any, one of the compounds provided in Table 1, but not limited to, and wherein all parts and percentages are by weight. Compound A has a high resilience but is softer than Compound B.

TABLE 1

| Components | Compound-A | Compound-B |
|---|---|---|
| Natural Rubber (NR) (% RHC) | 50 - 100 | 0 - 50 |
| Polybutadiene (PBD) (% RHC) | 0 - 50 | 50 - 100 |
| Carcass Carbon Black (phr) | 20 - 50 | -- |
| Tread Carbon Black (phr) | -- | 30 - 50 |
| Sulfur (phr) | .7 - 2.5 | .7 - 2.5 |
| Oil (phr) | .7 - 2.5 | 2 - 10 |

The carcass carbon black is carbon black which is normally formulated for or used in the carcass of a tire. Such carbon blacks generally have an ASTM particle size number of 5, 6 or 7. For example ASTM designations would include N754, N774, N776 and N660 (sometimes otherwise known as general purpose furnace black, GPF). Likewise, tread carbon black is carbon black which is normally formulated for or used in the tread of a tire. Such carbon blacks generally have an ASTM number for particle size of 3 and under. For example ASTM designations N326, N339 N349 and N299 (sometimes otherwise known as general purpose thermal black, GPT). % RHC as used herein and in the claims means the percent of rubber hydro-carbon, wherein the total of the RHC for each compound equals 100 percent.

In like manner the cap portion may be selected from, but not limited to, the compounds of Table 2, wherein all parts and percentages are by weight. Compound A has high traction characteristics while Compound B has better rolling resistance characteristics.

### TABLE 2

| Components | Compound A | Compound B |
|---|---|---|
| Natural Rubber (NR) (% RHC) | -- | 25 - 50 |
| Styrene-Butadiene Rubber (SBR) (% RHC) | 70 | 25 - 70 |
| Polybutadiene (PBD) (% RHC) | 30 | 25 - 50 |
| Carbon Black (Tread) | 0 - 100 | 40 - 70 |
| Sulfur | .7 - 2.5 | .7 - 2.5 |
| Oils | 35 - 60 | 35 - 60 |

Finally, the side portions may be selected from a variety of different compounds, such as those used in tire sidewalls. In accordance, however, with the preferred embodiment of this invention the side portions may be selected from the two compounds illustrated in Table 3, but not limited thereto and wherein all parts and percentages are by weight.

### TABLE 3

| Components | Compound A | Compound B |
|---|---|---|
| NR (% RHC) | 50 | 40 |
| PBD (% RHC) | 50 | 60 |
| Carbon Black (phr) | 50 | 50 |
| Sulfur (phr) | 2.5 | 2 |
| Oil (phr) | 10 | 4 |

The carbon black for the sidewalls of Table 3, for example, is a Fast Extrusion Black having an ASTM number of N550.

Specifically a passenger tire has been manufactured as shown in Table 4, which is intended to be representative rather than restricted to in the scope of the invention. All parts and percentages are by weight.

### TABLE 4

| Components | Cap Portion | Base Portion | Side Portion |
|---|---|---|---|
| Natural Rubber (NR) (% RHC) | - | 100 | 40 |
| Polybutadiene (PBD) (% RHC) | 30 | - | 60 |
| Styrene-Butadiene Rubber (SBR) (% RHC) | 70 | - | - |
| Carbon Black (phr) | 70 | 35 | 50 |
| Processing Oils (phr) | 37 | 4 | 4 |
| Sulfur (phr) | 1.75 | 2 | 2 |
| Zinc Oxide (phr) | 4 | 4 | 4 |
| Anti-Oxidants and Anti-Ozonants (phr) | 3 | 1.5 | 5 |

The base 32 of Figure 2 has a substantially constant thickness across the width of the tread, for example about 0.05 inches (.13cm ), extending from one side portion 36 to the other 38. The exact thickness of the base will vary depending upon the specific tire size and construction. However, it is preferred that when the tread is molded and vulcanized none of the base compound will be exposed in the grooves of the tire or in the wear surface.

Referring to Figure 3 for example, there is illustrated a partial section of a vulcanized tread 40 having grooves 42 molded therein. The vulcanization and molding causes the cap 44 and base 46 compounds to flow or to be redistributed. This may result in the base 46 being exposed in a groove, shown at 48. The base material may also flow into a traction element or rib 50, as shown at 52 to a point where during the normal course of wear the base material will be exposed. In the first case this would result in the base material being formulated against weathering. In the later case the initial traction of the tire may not be effected. However as the base material is exposed the traction will decrease due to the lower traction characteristics of the base material. Therefore, it is desirable to provide for a base which has a thickness or shape which will not permit the above two cases to occur.

One alternative to a base of a substantially constant thickness or cross-section is to contour the cross-section. In Figure 4 there is illustrated another embodiment of this invention. The tread 60 has a cap 62 and two side portions 64 and 66 as before, but base 68 now has a cross-sectional thickness which varies. The base 68 has its greatest thickness at its lateral or axial edges 70 and tapers radially inwardly in thickness axially from each. The thickness at its axial edges 70 may be for example about 0.080 inches (.20cm) and may taper down to between about 0.030 inches (.08cm) and 0.050 inches (.13cm). It is believed that by contouring the base portion 68 this will help prevent the base portion from flowing into a groove or to a point where it will be exposed in normal wear in a rib or traction member.

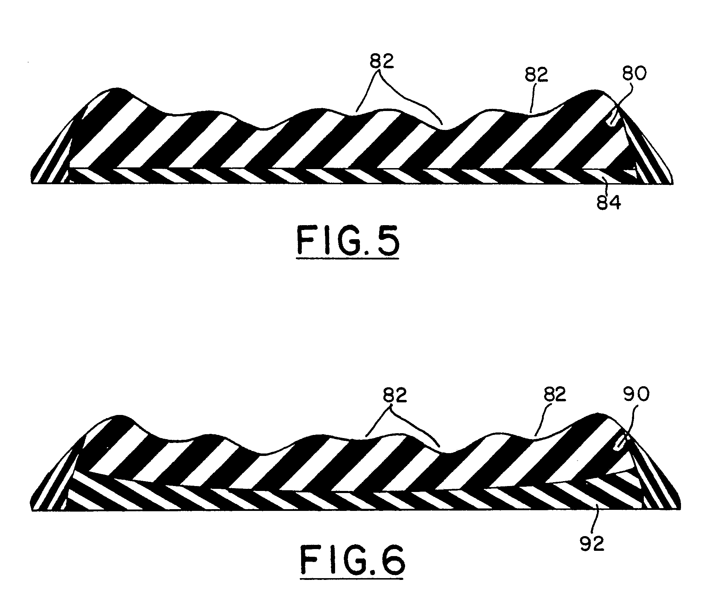

Referring to Figures 5 and 6, the tread according to another aspect of this invention may be extruded such that the cap portions, 80 and 90 respectfully, are contoured. The cap portions 80,90 may be contoured with radially inward indentations 82 to provide for the tread grooves and thereby limit the amount of flow of material during molding. The base, as above may be substantially constant in thickness, 84 or it may be contoured 92.

The size of the various portions of the tread may be expressed as a percentage of the area of the axial cross-section of the tread. Table 5 therefore provides a range for each portion as a percent of the total cross-section of the tread. For example, tires have been produced having a cap portion of about 79%, a base of about 14.5% and a total of both side portions of about 6.5% of the total cross-section of the tire.

TABLE 5

| Portion | % of Cross Section |
| --- | --- |
| Cap | 60 - 88 |
| Base | 10 - 30 |
| Total of both Side Portions | 2 - 10 |

The present invention applies equally to both newly manufactured tires and retreaded tires. The tread may be assembled either after the first compound has been placed around a new (unvulcanized) or used (vulcanized) tire carcass, or preassembled and then placed around a new (unvulcanized) or used (vulcanized) tire carcass. In any case, a tread for a tire may be manufactured by methods that will be described below.

The base portion, comprising the first elastomeric compound, is extruded through a die to produce a cross-section as described above. The cap portion comprising the second elastomeric compound is then extruded through another die and placed radially outwardly over the base portion. Finally, the side portions, comprising a third elastomeric compound may be extruded along the axial edges of the base and/or cap portions. These side portions may have a substantially triangular cross-section. The most preferable method of manufacture would, however, be to extrude all four portions simultaneously using a multiple head extruder.

The unvulcanized tread, such as illustrated in Figures 2, 4, 5 and 6, is then vulcanized in a mold. Normally during vulcanization the tread is provided with traction elements or ribs defined by grooves, except for instances where this may not be required, such as race tires. The tread may be either vulcanized by itself or after it has been assembled with a new or used tire carcass.

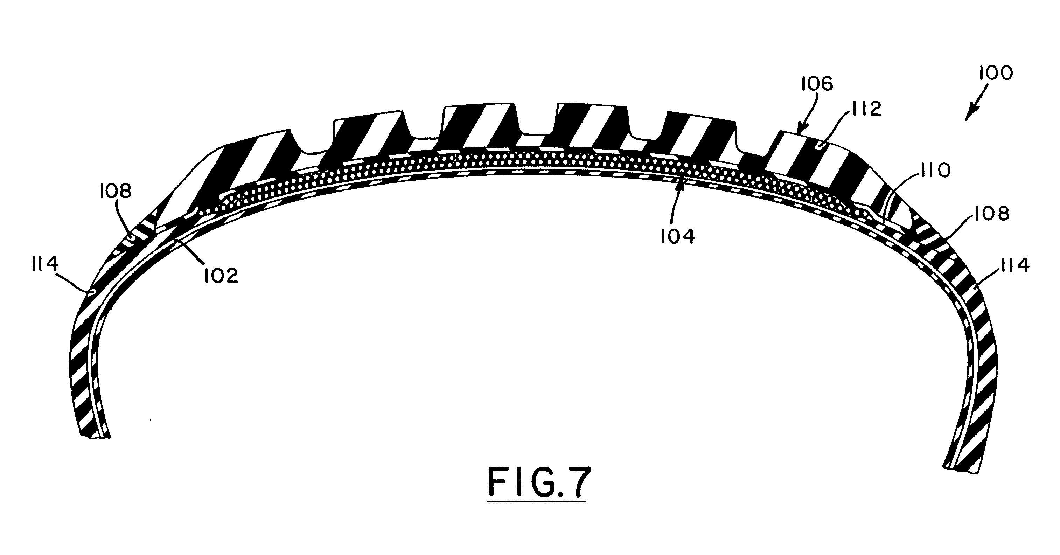

Referring now to Figure 7 there is illustrated a portion of a tire according to one aspect of the invention, shown generally as 100, having an assembled tread attached. The tire 100 is preferably a radial ply, pneumatic tire having at least one carcass-reinforcing ply 102 extending to a bead portion where they are anchored about substantially inextensible bead cores, not shown.

An annular tread-reinforcing structure 104 is located radially outwardly of the carcass reinforcing ply 102. The belt structure may have one or more belts of parallel cords embedded in an elastomeric material. The circumferentially extending tread portion 106 is located radially outwardly of the belt structure 104.

The tread 106 comprises a pair of wall portions 108, base portion 110 and a cap portion 112. The base portion 110 is located between the pair of side portions 108 and radially outwardly of the belt structure 104. The side portions are located radially outwardly of a pair of sidewalls 114. The pair of sidewalls 112, located radially inwardly of the side portions 108 extend radially inwardly therefrom to the annular bead portions.

Since the side portions 108 and the sidewalls 114 are substantially the same compound, the side portions provide a transition point wherein the stress resulting between the joining of the tread and the sidewalls is reduced.

While certain representative embodiments and details have been shown for the purpose of illustrating the invention, it will be apparent to those skilled in this art that various changes and modifications may be made therein without departing from the scope of the invention.

## Claims

1. An elastomeric tread (30,60) comprising a base portion (32;68) of a first elastomeric compound;
a cap portion (34;62) of a second elastomeric compound disposed over said base portion; characterized by
two side portions (36,38;64,66) of a third elastomeric compound, diametrically opposed to one another wherein said base and said cap portions are disposed there between.

2. The tread of Claim 1 characterized in that the first elastomeric compound has a lower rolling resistance than the second elastomeric compound and the third elastomeric compound is formulated for flexibility to provide for the gradual transition from a tire sidewall (114) to the base and cap portions of the tread and wherein the first elastomeric compound has a higher resilience and a lower hysteresis than the second elastomeric compound.

3. The tread of Claims 1 or 2 characterized in that the hot rebound value (ASTM Test 1054-66) of the first elastomeric compound is between 75 and 90; and the hot rebound of the second elastomeric compound is between 50 and 75.

4. The tread of Claims 1, 2, or 3 characterized in that the area of the cross section of the base portion (32,68) is between 10% and 30%, the area of the cross sections of both side portions (36,38;64,66) combined is between 2% and 10% of the total area of the cross section of the tread, and the area of the cross section of the cap portion is between 60% and 88%.

5. The tread of any of the above claims wherein the base tread rubber has a contoured cross-section and wherein the side portions of the tread have a substantially triangular or wedge shape cross-section.

6. The tread of claims of any of the above characterized in that the first elastomeric compound has a Shore A Hardness in the range of about 45 to 60 and the second elastomeric compound has a Shore A Hardness in the range of about 55 to 75.

7. The tread of any one of the above claims characterized in that the first elastomeric compound comprises natural rubber from about 0(RHC) to about 100(RHC), polybutadiene from about 0 to about 100(RHC) and carbon black from about 20phr to about 50phr.

8. The tread of Claim 9 characterized in that the second elastomeric compound comprises styrene-butadiene rubber of about 70RHC, polybutadiene rubber of about 30 and carbon black of about 70phr to about 100phr.

9. The tread of any one of the Claims 1-7 characterized in that the second elastomeric compound comprises natural rubber in the range from about 25 to about 50, styrene-butadiene rubber in the range from about 25 to about 70, polybutadiene in the range from about 25 to about 50 and carbon black in the range from about 40 to about 70.

10. A tire (100) having an exudate tread (106) and a pair of sidewalls (114) extending radially inwardly therefrom, said tread characterized by the tread according to any of the proceeding claims and wherein said side portions (108) of said tread being disposed radially outwardly from said sidewalls and wherein said cap portion (112) is adapted for engaging with a traction surface.

11. The tire of Claim 10 characterized by the compound of the side portions of the tread being substantially the same as the sidewalls.

12. The tire according to any one of the above claims characterized by the tread base (110) extending radially outwardly such that it is not exposed in a groove and such that it will not be exposed in a traction element or rib during the normal course of wear of the tread cap.

13. The method of manufacturing a tread for tires according to Claims 1-9 characterized by steps of

extruding a tread base portion of a first elastomeric compound;

extruding a tread cap portion of a second elastomeric compound on top of said base portion;

extruding two tread side portions of a third elastomeric compound, one side portion being along one edge of said base portion and the other portion being along an opposite edge of said base portion.

14. The tread of Claim 15 further characterized by the step of vulcanizing and molding the tread cap, base and side portions.

15. The method of Claims 13 or 15 further characterized by the steps of placing said tread circumferentially about a tire carcass and vulcanizing said tread.

FIG.1

FIG.2

FIG.4

FIG.3

82    82    80

84

FIG.5

82    82    90

92

FIG.6

FIG.7